# FASCICULE DE BREVET EUROPEEN

(11) **EP 3 759 185 B1**
(45) Date de publication et mention de la délivrance du brevet: **27.11.2024**
(21) Numéro de dépôt: 19706679.8
(22) Date de dépôt: 26.02.2019
(51) Int. Cl.: C09D 183/04

(54) **COMPOSITION DE COUCHE DE FINITION POUR REVETEMENT ANTICORROSION DE PIECE METALLIQUE, PROCEDE HUMIDE-SUR-HUMIDE (WET-ON-WET) D'APPLICATION D'UNE COUCHE DE FINITION, REVETEMENT ANTICORROSION DE PIECES METALLIQUES ET PIECE METALLIQUE REVETUE**
DECKLACKZUSAMMENSETZUNG ZUR KORROSIONSBESTÄNDIGEN BESCHICHTUNG EINES METALLTEILS, NASS-IN-NASS-VERFAHREN ZUM AUFBRINGEN EINER DECKSCHICHT, KORROSIONSBESTÄNDIGES BESCHICHTEN VON METALLTEILEN UND BESCHICHTETES METALLTEIL
FINISH COAT COMPOSITION FOR CORROSION-RESISTANT COATING OF A METAL PART, WET-ON-WET METHOD FOR APPLYING A FINISH COAT, CORROSION-RESISTANT COATING OF METAL PARTS, AND COATED METAL PART

(30) Priorité: 26.02.2018 FR 1851660
(43) Date de publication de la demande: 06.01.2021
(73) Titulaire: NOF Metal Coatings Europe, 60100 Creil (FR)
(72) Inventeur: VALEYRE, Olivier, 60820 BORAN SUR OISE (FR); MENET, Jean-François, 60130 LIEUVILLERS (FR); LAHAYE, Yan, 60510 LA NEUVILLE EN HEZ (FR)
(74) Mandataire: AtlantIP International
(86) Numéro de dépôt international: PCT/EP2019/054768
(87) Numéro de publication internationale: WO 2019/162531

(56) Documents cités:
- US-A1- 2008 096 024

## Description

### INTRODUCTION

La présente invention porte sur une composition de finition pour revêtement de pièce métallique. La présente invention porte également sur un revêtement de pièce métallique comprenant ladite composition de finition, le procédé d'application dudit revêtement ainsi que le substrat métallique revêtu par ledit revêtement.

### ART ANTERIEUR

Il existe désormais des compositions de revêtement anticorrosion permettant l'obtention de revêtements anticorrosion présentant une protection cathodique satisfaisante alors même que le revêtement ne comprend pas de chrome hexavalent. Par exemple, le brevet EP 808 883 et la demande internationale WO 2005/078026 décrivent des compositions de revêtement anticorrosion exemptes de chrome hexavalent et dont le solvant principal est de l'eau.

US2008/096024 A1 divulgue une composition de revêtement, des articles revêtus et procédés de revêtement, dans lesquels la composition comprend un système de résine comprenant un polysilazane ; et des particules de verre ayant un point de ramollissement inférieur à la température de fonctionnement, un coefficient de dilatation thermique d'au moins 80 et une constante diélectrique d'au moins 5.

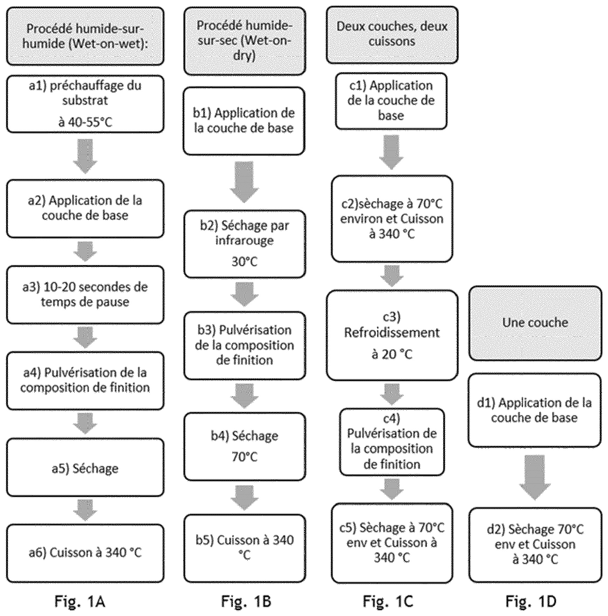

Cependant, ces compositions restent vulnérables contre les acides forts et les bases faibles présents dans la plupart des nettoyants pour pièce métallique, notamment pour pièces automobiles. Les finitions traditionnelles ne permettent, en effet, pas d'atteindre les performances de haute tenue chimiques et thermiques recherchées. Ainsi, il a été envisagé d'appliquer une couche de liant particulier supplémentaire pour apporter un effet barrière protégeant la surface contre les agressions chimiques. Cependant, cette technologie demande un second traitement sur les pièces métalliques, impliquant un refroidissement et une cuisson supplémentaire (cf. Figure 1 C). Du fait de la haute température de cuisson nécessaire pour cuire le revêtement initial (environ 340° C par induction), cela mène à une forte consommation énergétique et demande des aménagements importants en termes d'espace pour le refroidissement des pièces revêtues.

### DESCRIPTION DE L'INVENTION

La présente invention a pour premier objet une composition de finition pour revêtement d'une pièce métallique préalablement revêtue d'un revêtement anti-corrosion comprenant au moins un liant de type alkylphénylsiloxane, de microbilles de verre, et éventuellement des particules à haute tenue thermique et/ou de l'aluminium préférentiellement lamellaire, ladite composition présentant un indice de Thixotropie (ITh) supérieur ou égal à 3.

De manière surprenante, il a été constaté qu'une telle composition de finition confère au revêtement, notamment au revêtement anticorrosion, une protection satisfaisante contre les agressions chimiques, notamment contre les acides fort et les bases faibles, et thermique. En outre, une telle composition peut être appliquée selon un procédé de type humide-sur-humide (wet-on- wet), c'est-à-dire qu'elle peut être directement appliqué sur le substrat métallique déjà revêtu d'une première composition de revêtement anticorrosion (appelée couche de base par la suite) encore humide (cf. Figure 1A). Ceci permet d'obtenir un revêtement pour pièce métallique présentant une protection cathodique et une protection contre les agressions chimiques et thermique, à l'aide d'un procédé ne comprenant qu'une seule cuisson et ne nécessitant pas de temps de refroidissement supplémentaire. La présente invention permet donc une réduction significative de la consommation énergétique par rapport à un procédé de traitement en deux couches et deux cuissons (cf. Figure 1D).

### Définition

Par « composition de revêtement » on entend, au sens de la présente invention, une composition en dispersion aqueuse, destinée à être appliquée sur un substrat, en particulier métallique, puis soumise à une opération de cuisson afin de donner le revêtement. Par "milieu aqueux" de la composition de revêtement, on entend de l'eau ou une combinaison d'eau et d'un liquide organique. D'autres liquides peuvent éventuellement être utilisés avec l'eau ou avec la combinaison d'eau et de liquide organique mais, de préférence, seulement une quantité très mineure du milieu est un tel autre matériau liquide. De préférence, le milieu aqueux est composé d'eau. Avantageusement, l'eau est présente dans la composition de revêtement selon une quantité d'environ 30 à 70%, en particulier 30 à 60% en masse, par rapport à la masse totale de la composition.

Par « composition de couche de base » ou « couche de base » on entend, au sens de la présente invention, une composition de revêtement telle que définie ci-dessus, destinée à être appliquée sur un substrat, en particulier métallique, ledit substrat n'ayant pas été revêtu au préalable par une autre composition de revêtement.

Par « composition de finition » ou « couche de finition » on entend, au sens de la présente invention, une composition de revêtement telle que définie ci-dessus, destinée à être appliquée sur un substrat, en particulier métallique, ledit substrat ayant été préalablement revêtu par une autre composition de revêtement, notamment par une couche de base.

Au sens de la présente invention, le « revêtement » est donc obtenu par application d'une ou plusieurs composition(s) de revêtement, par exemple une composition de couche de base et une composition de finition, sur un substrat, en particulier métallique, la ou les couche(s) de revêtement étant ensuite soumise(s) à une opération de cuisson. Les termes « revêtement » et « revêtement anti-corrosion » sont utilisés dans la présente demande de manière synonyme.

Par « couche de revêtement humide » ou « composition de revêtement humide » on entend, au sens de la présente invention, une composition de revêtement telle que définie ci-dessus qui n'a pas encore été soumise à une opération de cuisson ou de réticulation. Ladite composition de revêtement se trouve donc encore sous forme non totalement réticulée. Après cuisson ou réticulation, on parle de revêtement sec ou réticulé. Les termes « humide » et « non totalement réticulée » sont utilisés dans la présente demande de manière synonyme. De même, les termes « sec » et « réticulé » sont utilisés dans la présente demande de manière synonyme.

On entend par « solvant organique lourd » dans le cadre de la présente invention, un solvant organique miscible dans l'eau, dont la tension de vapeur à 20°C est de préférence inférieure à 4 mmHG, avantageusement inférieure à 2 mmHG.

Dans la présente description et les revendications, les termes « plage comprise entre A et B » ou « plage de A à B », employés pour désigner des plages de valeurs, incluent les bornes A et B de ces plages.

### Composition de finition

La composition de finition pour revêtement de pièce métallique préalablement revêtue d'un revêtement anti-corrosion selon la présente invention comprend au moins un liant de type alkylphénylsiloxane et des microbilles de verre.

Avantageusement, la composition de finition comprend une teneur en liant de type alkylphénylsiloxane inférieure ou égale à 30 % en masse, avantageusement comprise entre 10 % et 30 % en masse, plus avantageusement entre 15 % et 18% en masse, par rapport à la masse totale de la composition de finition. La teneur en liant est exprimée en teneur en matière sèche. En d'autres termes, la composition de finition comprend avantageusement une concentration pigmentaire en volume « CPV » correspondant au rapport (volume de [pigments + charges]) / (volume [pigments + charges] + volume de liants sec) inférieure ou égale à 22 %, avantageusement comprise entre 18 % et 22 %.

Avantageusement, le liant est de type méthylphénylsiloxane.

Les inventeurs ont découvert que, dans le cadre d'un procédé d'application humide-sur-humide (wet-on-wet) d'une composition de finition, le liant de type alkylphénylysiloxane dans le cadre de la formulation développée ne se dégrade pas et contribue aux propriétés hydrophobes du système complet ainsi qu'à la tenue aux acides forts et aux bases faibles (tel que H₂SO₄ à 38 % ou NaOH à 5 %), et ce après cuisson et après choc thermique complémentaire (tel qu'un choc thermique de 300 °C pendant une heure). Les liants de type organiques tels que phénoxy phénolique, phénoxy mélamine, acrylique ou silicate/acrylique, utilisés dans le cadre d'un procédé d'application humide-sur-humide (wet-on-wet) d'une composition de finition, confèrent une moins bonne résistance chimique et thermique et peuvent provoquer des problèmes d'aspect.

Les inventeurs ont également découvert que la présence de microbilles de verres dans la composition de finition permet également de limiter voire éviter l'imprégnation de la composition de finition dans la couche de base. Les microbilles de verre permettent ainsi de renforcer la résistance chimique du système, notamment à faible épaisseur de finition.

Ainsi, la composition de finition comprend avantageusement au moins 2 % en masse, plus avantageusement de 2 % à 5% en masse, en particulier de 3 % à 4 % en masse, en particulier de 3.5 % à 4.5 % en masse, de microbilles de verre, par rapport à la masse totale de la composition de finition. En d'autres termes, la composition de finition comprend avantageusement une teneur en microbilles de verre supérieure ou égale à 6 % de CPV, avantageusement comprise entre 6-12 % de CPV, plus avantageusement de 10 % de CPV. Dans ce cas, l'unité de CPV correspond au rapport (volume de microbille / (volume [pigments + charges] + volume de liants sec))

Les microbilles de verre sont des particules de verre de forme sphérique. Avantageusement, leur diamètre moyen est compris entre 1 µm et 15 µm, de préférence entre 2 µm) et 10 µm. Les diamètres moyen D50 et D95 sélectionnés sont en relation directe avec l'épaisseur maximale de finition recherchée, la sélection d'un D50 à 2-3 µm) et d'un D95 à 6-8 µm) correspondent à des épaisseurs de finition pouvant aller jusqu'à 8 µm. Les diamètres moyens peuvent être mesurés par tamisage par exemple.

Les microbilles de verre sont avantageusement des microbilles de verre sodo-calcique. Elles peuvent notamment être traitées pour une utilisation dans différentes matrices thermoplastiques ou thermodurcissables.

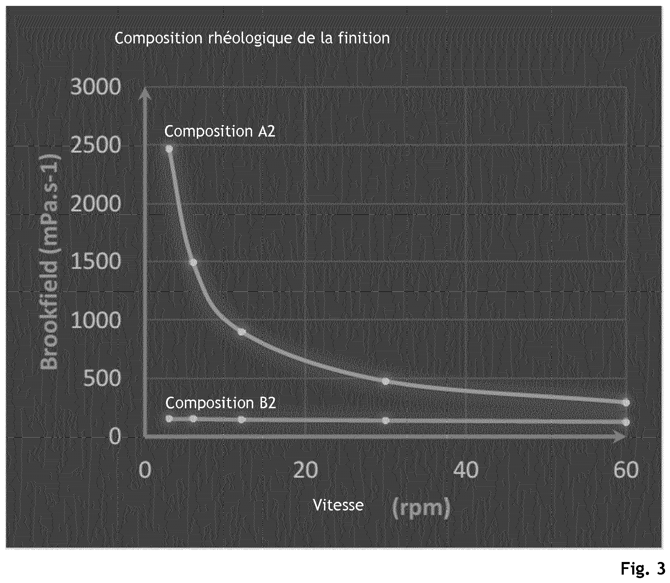

Les inventeurs ont également découvert que la rhéologie de la composition de finition selon l'invention avait une grande importance dans le cadre d'un procédé d'application humide-sur-humide (wet-on-wet). En effet, afin d'éviter l'imprégnation (également appelée interpénétration) de la couche de finition dans la couche de base, la composition de finition doit présenter un rapport [Viscosité mesurée à 6 tours par minutes (TPM) / Viscosité mesurée à 60 tours par minutes (TPM)], appelé « Indice de Thixotropie (ITh) », supérieur ou égal à 3. Les viscosités à 6TPM et 60 TPM sont mesurées selon la méthode NF EN ISO 2555 (septembre 1999) bien connue de l'homme de l'art. La mesure est généralement effectuée à 20°C +/-2°C. La méthode NF EN ISO 2555 (septembre 1999) consiste à mesurer la résistance d'un mobile en rotation dans un échantillon. La valeur du couple mesuré, la vitesse de rotation et les caractéristiques du mobile sont combinés pour calculer la valeur de viscosité, ces mesures sont reportées sous la forme de graphes tels que celui de la figure 3. Pour la composition de finition, les mesures sont effectuées à l'aide du mobile LV2 de Brookfield et les viscosités sont mesurées sur une plage de vitesse allant de 3 à 60 tours par minute (TPM).

Avantageusement, la composition de finition selon l'invention présente en outre un profil rhéologique pseudo plastique (encore appelé rhéofluidifiant) pouvant notamment être déterminé suivant la même méthode NF EN ISO 2555 (septembre 1999), bien connue de l'homme de l'art telle que décrite plus haut. La mesure est généralement effectuée à 20°C +/-2°C.

La présence de microbilles de verre dans la composition de la finition, associée à l'indice Thixotropique ITh supérieur à ou égal 3, et avantageusement au profil pseudo plastique contribuent à obtenir un faible taux d'imprégnation de la couche de finition dans la couche de base encore humide. Cela permet en outre d'améliorer la tenue du revêtement final au brouillard salin, c'est-à-dire d'améliorer la protection cathodique du revêtement, notamment du revêtement anticorrosion.

Le comportement pseudo plastique d'une composition de revêtement en phase aqueuse peut en outre être obtenu par l'ajout d'agents épaississants bien connus de l'homme de l'art.

Parmi les agents épaississants destinés aux peintures en phase aqueuse nous citerons notamment :
- Les épaississants tels que les bentonites ou montmorillonites (généralement modifiées par des molécules organiques). Ceux-ci confèrent plutôt un comportement thixotropique,
- les silices pyrogénées. Celles-ci sont bien connues pour conférer une structure gélifiée.
- Les épaissisants non associatifs tels que les polysaccharides (par exemple la gomme de xanthane, les dérivés cellulosiques, certains copolymères de l'acide acrylique). Ces épaississants confèrent plutôt un comportement pseudo plastique (rhéofluidifiant) sans thixotropie.
- Les épaississants associatifs tels que par exemple les épaississants uréthanes éthoxylés ou encore des épaississants acryliques modifiés hydrophobes ou encore des polymères cellulosiques éthérifiés. Ces épaississants impliquent généralement d'être neutralisés par une base lors de leur incorporation dans la composition en phase aqueuse.
- Les nano ou microfibrilles de cellulose (NMFC) qui peuvent conférer aux compositions en phase aqueuse des comportements pseudo plastiques (rhéofluidifiants) tout à fait intéressants. Ces NMFC peuvent par exemple se présenter sous forme de « plaquettes » d'une dimension moyenne maximale d'au moins 10 microns et d'une dimension moyenne minimale inférieure à 1 micron comme décrit dans le brevet WO2013128196A1.

Avantageusement, le couple gomme xanthane/NMFC est utilisé en tant qu'épaississant dans le cadre de la présente invention. Avantageusement, le ratio massique gomme xanthane/NMFC est compris entre 45/10 et 15/10, avantageusement entre 30/10 et 15/10, plus avantageusement entre 30/10 et 20/10. Avantageusement, le ratio massique gomme xanthane/NMFC est de 45/10, de préférence de 30/10, de préférence de 20/10. L'utilisation combinée du couple gomme xanthane/NMFC et de microbilles de verre permet ainsi d'obtenir un taux d'imprégnation de la composition de finition dans la couche de base encore humide inférieur à 10 %. Le taux d'imprégnation de la composition de finition dans la couche de base correspond à la quantité de composition de finition qui pénètre dans la couche de base et qui ne se trouve donc plus à la surface du système substrat/couche de base/couche de finition, par rapport à la quantité totale de composition de finition appliquée sur le système. Ce taux d'imprégnation peut être mesuré par des techniques connues de l'homme du métier telle que l'analyse de la teneur en élément silice (présent dans le liant de type alkylphénylsiloxane) présent en surface du système par fluorescence X.

Avantageusement, la composition de finition selon l'invention comprend en outre des particules de charge à haute tenue thermique et/ou de l'aluminium particulaire. Les particules de charge à haute tenue thermique sont caractérisées par une résistance thermique d'au moins 500°C. Lesdites particules de charge à haute tenue thermique sont avantageusement choisies parmi les poudres de nitrure de bore ou les titanates de potassium sous forme lamellaire. Les particules de charge à haute tenue thermique avantageusement présentes dans la composition de finition contribuent en général à la protection thermique du système.

Avantageusement, la composition de finition selon l'invention comprend un aluminium particulaire, en particulier des particules d'aluminium lamellaire, qui, outre une protection thermique, confèrent l'aspect esthétique attendu, en particulier une couleur de type argentée, pour un revêtement de pièce métallique. L'aluminium particulaire, notamment lamellaire, a avantageusement une granulométrie inférieure à 100 µm, encore plus avantageusement inférieure à 40 µm. Avantageusement, la teneur en aluminium particulaire, notamment en particules d'aluminium lamellaire, dans la composition de finition (liquide) ne dépassera pas environ 10 % en masse, par rapport à la masse totale de la composition de finition pour maintenir le meilleur aspect de revêtement. Plus avantageusement, la teneur en métal particulaire représentera de 3 % à 10 % en masse, plus avantageusement entre 3 % et 5 % en masse par rapport à la masse totale de la composition de finition. En d'autres termes, la composition de finition comprend avantageusement une teneur en particules d'aluminium, notamment en particules d'aluminium lamellaire, supérieure ou égale à 6 % CPV, avantageusement comprise entre 6-12 % CPV, plus avantageusement de 10 % CPV. Dans ce cas, l'unité CPV correspond au rapport (volume de particules d'aluminium / (volume [pigments + charges] + volume de liants sec)) .

Avantageusement, la composition de finition selon l'invention peut en outre comprendre un agent mouillant. De tels agents mouillants appropriés peuvent être par exemple un tensioactif acétylénique éthoxylé non ionique tel que le 2,4,7,9-tetraméthyl-5-décyne-4,7-diol éthoxylé. La teneur de l'agent mouillant est avantageusement de 0,01 % à 3 % en masse, plus avantageusement de 0,01 % à 1 % en masse, par rapport à la masse totale de la composition de finition.

Avantageusement, la composition de finition selon l'invention peut en outre comprendre un agent dispersant, en particulier choisi par exemple parmi les copolymères acryliques. Avantageusement, les agents dispersant de la marque BYK^{®} sont utilisés. La teneur de l'agent dispersant est avantageusement de 0,01 % à 3 % en masse, plus avantageusement de 0,01 % à 1 % en masse, par rapport à la masse totale de la composition de finition.

Avantageusement, la composition de finition selon l'invention peut en outre comprendre un pigment préférentiellement de type minéral, avantageusement en une teneur de 1 % à 10 % en masse, avantageusement de 4 % à 5% en masse, par rapport à la masse totale de la composition de finition. L'ajout par exemple de particules lamellaires de titanate de potassium ou de particules de nitrure de bore peuvent permettre de renforcer la résistance thermique du revêtement.

Avantageusement, la composition de finition selon l'invention est exempte de chrome. Par « exempte de chrome », on entend que la composition ne renferme pas de chrome hexavalent comme cela peut être représenté par l'acide chromique ou les dichromates.

Avantageusement, la composition de finition selon l'invention peut en outre comprendre un solvant organique lourd.

L'ajout de solvant organique lourd va avoir un impact sur la durée des étapes de séchage et de cuisson et donc sur la durée totale du procédé d'application du revêtement. Par conséquent, la teneur en solvant organique lourd dans la composition de finition selon l'invention pourra être adaptée en fonction du type de procédé souhaité : dans des procédés pour lesquels on souhaite diminuer la durée totale, il est possible de réduire la durée de l'étape de séchage et/ou de cuisson en ajoutant une forte teneur en solvant organique lourd ; en revanche, dans des procédés pour lesquels l'impact environnemental prime sur la durée totale, une teneur nulle ou faible en solvant organique lourd sera préférée.

Avantageusement, la teneur en solvant organique lourd dans la composition de finition selon l'invention est de 0.01 % à 40 %.

De manière avantageuse selon un premier aspect de l'invention, la teneur en solvant organique lourd dans la composition de finition selon l'invention est de 0.01 % à 35 %, plus avantageusement de 0.01 % à 30 %, plus avantageusement de 0.01 % à 25 %, plus avantageusement de 0.01 % à 20 %, encore plus avantageusement de 1 % à 20 %, en masse par rapport à la masse totale de la composition de finition.

De manière avantageuse selon un second aspect de l'invention, la teneur en solvant organique lourd dans la composition de finition selon l'invention est de 1 % à 40 %, plus avantageusement de 20 % à 40 %, plus avantageusement de 21 % à 40 %, plus avantageusement de 25 % à 40 %, encore plus avantageusement de 30 % à 40 %, en masse par rapport à la masse totale de la composition de finition.

Avantageusement, à titre de solvant organique lourd, on peut notamment utiliser les solvants glycoliques tels que les éthers de glycol, en particulier le monoéthylène glycol, le diéthylène-glycol, le triéthylène-glycol et le dipropylène-glycol, les acétates, le propylène-glycol, le polypropylène-glycol, l'éther méthylique de propylène glycol, ainsi que leurs mélanges. Préférentiellement, dans le cadre de la présente invention, on utilisera les solvants glycoliques tels que les éthers de glycol, et en particulier le monoéthylène glycol, le dipropylène glycol ou le triéthylène glycol.

En résumé, la composition de finition selon l'invention comprend avantageusement (en % exprimé en masse par rapport à la masse totale de la composition finale) :
- De 10 % à 30 % en masse d'un liant de type alkylphénylsiloxane, plus avantageusement de 15 % à 18 % en masse, exprimé par sa teneur en matière sèche ;
- De 2 % à 5 % en masse de microbilles de verre, plus avantageusement de 3.5 % à 4.5 % en masse ;
- De 0 % à 10 % en masse d'aluminium particulaire, plus avantageusement entre 3 % et 10 % en masse, notamment entre 3 % et 5 % en masse ;
- De 30 à 70% en masse d'eau, plus avantageusement de 40 à 60% en masse ;
- Eventuellement de 0.2 % à 1 %, avantageusement de 0.25 % à 0.9 % en masse d'agent épaississant, notamment de 0.30 % à 0.40 % en masse d'un mélange gomme xanthane/NMFC (20:10) ;
- Eventuellement, de 0,01 % à 3 % en masse d'un agent mouillant, avantageusement de 0,01 % à 1 % en masse ;
- Eventuellement, de 0,01 % à 3 % en masse d'un agent dispersant, avantageusement de 0,01 % à 1 % en masse ; et
- Eventuellement, de 1 % à 10 % en masse d'un pigment préférentiellement minéral, avantageusement de 4 % à 5 % en masse ;

- Eventuellement, de 0.01 % à 40 %, en masse d'un solvant organique lourd de type monoéthylène glycol, le dipropylène glycol ou le triéthylène glycol, plus avantageusement de 1 % à 20 %,
chacun de ces ingrédients étant tel que défini ci-dessus.

Selon un autre mode de réalisation, la composition de finition selon l'invention comprend avantageusement (en % exprimé en masse par rapport à la masse totale de la composition finale) :
- De 10 % à 30 % en masse d'un liant de type alkylphénylsiloxane, plus avantageusement de 15 % à 18 % en masse ;
- De 2 % à 5 % en masse de microbilles de verre, plus avantageusement de 3 % à 4 % en masse, par rapport à la masse totale de la composition de finition ;
- De 0 % à 10 % en masse d'aluminium particulaire, plus avantageusement entre 3 % et 10 % en masse, notamment entre 3 % et 5 % en masse ;
- Eventuellement de 0.5 % à 1 % en masse d'agent épaississant, notamment de 0.40 % à 0.60 % en masse d'un mélange gomme xanthane/NMFC (30:10) ;
- Eventuellement, de 0,01 % à 3 % en masse d'un agent mouillant, avantageusement de 0,01 % à 1 % en masse ;
- Eventuellement, de 0,01 % à 3 % en masse d'un agent dispersant, avantageusement de 0,01 % à 1 % en masse ; et
- Eventuellement, de 1 % à 10 % en masse d'un pigment préférentiellement minéral, avantageusement de 4 % à 5 % en masse,
- Eventuellement, de 0.01 % à 40 %, en masse d'un solvant organique lourd de type monoéthylène glycol, le dipropylène glycol ou le triéthylène glycol, plus avantageusement de 1 % à 20 %,
chacun de ces ingrédients étant tel que défini ci-dessus.

### Revêtement anticorrosion

La présente invention a pour second objet, un revêtement anticorrosion de pièce métallique comprenant au moins deux couches différentes l'une de l'autre, la première couche étant une couche de base comprenant au moins de l'eau, un métal particulaire et un liant, et la seconde couche étant une composition de finition telle que définie ci-dessus.

Selon l'invention, le revêtement anticorrosion de pièces métalliques est appliqué sur les pièces métalliques à protéger, avec une épaisseur totale humide uniforme avantageusement comprise entre 11 µm) et 195 µm humide correspondant à une épaisseur sèche uniforme avantageusement comprise entre 2 µm) et 35 µm, plus avantageusement entre 30 µm) et 140 µm) humide correspondant à une épaisseur sèche uniforme avantageusement comprise entre 5 µm) et 25 µm, plus avantageusement entre 55 µm) et 111 µm) humide correspondant à une épaisseur entre 10 µm) et 20 µm) sèche, plus avantageusement entre 55 µm) et 110 µm) humide correspondant à une épaisseur entre 10 µm) et 20 µm) sèche, encore plus avantageusement entre 55 µm) et 85 µm) humide correspondant à une épaisseur sèche entre 10 µm) et 15 µm.

En particulier, l'épaisseur humide de la finition du revêtement anticorrosion selon l'invention est avantageusement comprise entre 6 µm) et 65 µm correspondant à une épaisseur sèche comprise entre 1 µm) et 12 µm, plus avantageusement entre 12 µm) et 65 µm) correspondant à une épaisseur sèche comprise entre 2 µm) et 12 µm, plus avantageusement entre 6 µm) et 60 µm) correspondant à une épaisseur sèche comprise entre 1 µm et 10 µm, plus avantageusement entre 12 µm) et 35 µm correspondant à une épaisseur sèche comprise entre 2 µm) et 6 µm, plus avantageusement l'épaisseur de la finition humide du revêtement doit être comprise entre 6 µm) et 35 µm) correspondant à une épaisseur de finition sèche comprise entre 1 µm) et 6 µm, plus avantageusement entre 12 µm) et 35 µm correspondant à une épaisseur sèche comprise entre 2 µm) et 6 µm.

Le revêtement anticorrosion selon l'invention confère à la pièce métallique sur laquelle il est appliqué, une protection contre la corrosion, notamment une protection cathodique, et une résistance chimique, notamment une résistance aux agressions chimiques, en particulier aux acides forts et/ou bases faibles.

Avantageusement, la composition de couche de base est une composition pour revêtement anticorrosion à dispersion aqueuse, avantageusement exempte de chrome, comprenant, conjointement avec le milieu aqueux :
- Un métal particulaire,
- Un liant
- Eventuellement un liquide organique,
- Eventuellement un épaississant ; et
- Eventuellement un agent mouillant.

Le métal particulaire est avantageusement choisi dans le groupe constitué par le zinc, l'aluminium, le chrome, le manganèse, le nickel, le titane, leurs alliages et mélanges intermétalliques, ainsi que leurs mélanges. Le métal particulaire est avantageusement choisi parmi le zinc et l'aluminium, ainsi que leurs alliages et leurs mélanges ou leurs alliages avec le manganèse, le magnésium, l'étain ou le Galfan^{®}. Le métal particulaire présent dans la composition est avantageusement sous forme de poudre lamellaire. Le métal particulaire est avantageusement choisi parmi le zinc lamellaire et/ou l'aluminium lamellaire, et de préférence comprend du zinc lamellaire. Le métal particulaire a avantageusement une granulométrie inférieure à 100 µm, encore plus avantageusement inférieure à 40 µm. La teneur en métal particulaire de la composition de couche de base ne dépassera pas environ 35 % en masse de la masse totale de la composition de couche de base pour maintenir le meilleur aspect de revêtement. Avantageusement, la teneur en métal particulaire représentera de 1,5 % à 35 % en masse, plus avantageusement entre 10 % et 35 % en masse, par rapport à la masse totale de la composition de couche de base.

La composition de couche de base comprend avantageusement de 3 % à 50% en masse, par rapport à la masse totale de la couche de base, de liant. Le liant est avantageusement choisi parmi les liants à base de silane, les liants à base de titanate, les liants à base de zirconate, les liants à base de silicate, et les liants à base de résines phénoxy en phase aqueuse réticulées par exemple par une mélamine. Dans une variante de l'invention, La couche de base comprend avantageusement de 3 % à 35% en masse, plus avantageusement 3 % à 25% en masse, par rapport à la masse totale de la couche de base, de liant. Le liant est alors avantageusement choisi parmi les liants à base de silane, les liants à base de titanate, les liants à base de zirconate, et leurs mélanges, en particulier deux à deux. En particulier, le liant peut être un mélange de silane et de titanate. Les liants à base de silane sont décrits dans la demande internationale WO 2017/042483, en particulier de la ligne 26 page 3 à la ligne 17 page 4. Les liants à base de titanate sont décrits dans la demande internationale WO2017/042483 de la ligne 19 page 4 à la ligne 16 page 5 et dans le dépôt de demande de brevet N° 1761267 de la ligne 19 de la page 3 à la ligne 17 de la page 4. Les liants à base de zirconate sont décrits dans la demande internationale WO2017/042483 de la ligne 17 page 5 à la ligne 14 page 6. Enfin, les liants à base de silicate sont décrits dans la demande internationale WO2017/042483 page 6, de la ligne 15 à la ligne 22.

Avantageusement, la composition de couche de base peut en outre comprendre un liquide organique. A titre de liquide organique, on peut notamment utiliser les solvants glycoliques tels que les éthers de glycol, en particulier le diéthylène-glycol, le triéthylène-glycol et le dipropylène-glycol, les acétates, le propylène-glycol, le polypropylène-glycol, le nitropropane, les alcools, les cétones, l'éther méthylique de propylène glycol, l'isobutyrate de triméthyl-2,2,4 pentanediol (1,3) (texanol), le white spirit ainsi que leurs mélanges. Le dipropylène-glycol est particulièrement avantageux, notamment pour des raisons économiques et de protection de l'environnement. A titre de solvant organique, on peut également utiliser les esters, tels que le lactate d'éthyle, l'oléate de méthyle ou les méthyl- ou éthyl- esters d'acides gras. Lorsqu'un liquide organique est présent dans la couche de base, il sera présent selon une quantité de 1 % à 30 % en masse, calculée sur la masse totale de la composition. La présence du liquide organique, notamment en des quantités supérieures à 10 % en masse, par exemple de 15 % à 25 % en masse, peut améliorer la résistance à la corrosion du revêtement, mais l'utilisation de quantités supérieures à environ 30 % en masse peut devenir non économique.

Avantageusement, la composition de couche de base peut en outre comprendre un agent épaississant, en particulier en une teneur comprise entre 0,05 % et 2,00 % en masse d'épaississant. Les épaississants pouvant être utilisés dans la composition de couche de base sont décrits dans la demande européenne EP 0 808 883 de la colonne 4, ligne 52 à la colonne 5, ligne 25.

Avantageusement, la composition de couche de base peut en outre comprendre un agent mouillant, en particulier en une teneur de 0,01 % à 3 % en masse, par rapport à la masse totale de la composition de couche de base. De tels agents mouillants appropriés comprennent les produits d'addition d'alkylphénol polyéthoxylés non ioniques, à titre d'exemple. De même, on peut utiliser les esters de phosphates organiques anioniques.

La composition de couche de base peut éventuellement comprendre d'autres ingrédients tels qu'un modificateur de pH, ou des phosphates. Ces autres ingrédients sont également décrits dans la demande européenne EP 0 808 883.

### Procédé d'application humide-sur-humide (wet-on-wet)

Un troisième objet de la présente invention concerne un procédé d'application d'un revêtement anticorrosion tel que défini ci-dessus sur un substrat métallique, ledit procédé comprenant une étape d'application de ladite composition de finition sur ladite première couche de base préalablement appliquée sur le substrat métallique, caractérisé en ce que ladite couche de base est encore humide lors de l'application de la composition de finition. Ce type de procédé est appelé procédé humide-sur-humide (wet-on-wet) et peut être représenté par exemple par le schéma de la Figure 1A.

Le procédé selon l'invention a pour caractéristique spécifique de ne pas nécessiter d'étape de cuisson/réticulation de la couche de base avant l'application de la couche de finition.

La couche de base peut être appliquée sur le substrat métallique par diverses techniques comme par exemple les techniques d'immersion/émersion avec ou sans mise en mouvement des pièces à traiter, lorsque les pièces à traiter sont compatibles avec ces processus. Il est également envisagé d'utiliser une technique de pulvérisation ainsi que des combinaisons comme une pulvérisation sous rotation. Avantageusement, la couche de base est appliquée sur le substrat métallique par pulvérisation.

Avantageusement, la couche de base est appliquée sur les pièces métalliques à protéger, avec une épaisseur totale humide uniforme avantageusement comprise entre 11 µm et 195 µm humide correspondant à une épaisseur sèche uniforme avantageusement comprise entre 2 µm) et 35 µm, plus avantageusement entre 30 µm) et 140 µm) humide correspondant à une épaisseur sèche uniforme avantageusement comprise entre 5 µm) et 25 µm, plus avantageusement entre 55 µm et 111 µm) humide correspondant à une épaisseur entre 10 et 20 µm) sèche, plus avantageusement entre 55 µm) et 110 µm) humide correspondant à une épaisseur entre 10 µm) et 20 µm) sèche, encore plus avantageusement entre 55 µm) et 85 µm) correspondant à une épaisseur sèche entre 10 µm) et 15 µm.

La couche de finition est ensuite appliquée sur la couche de base encore humide (c'est-à-dire avant cuisson/réticulation) préférentiellement par pulvérisation. La technique de pulvérisation est connue de l'homme du métier et peut être combinée à une rotation du substrat métallique.

Avantageusement, la couche de finition est appliquée sur la couche de base a une épaisseur humide comprise entre 6 µm) et 65 µm) correspondant à une épaisseur sèche comprise entre 1 µm) et 12 µm, plus avantageusement entre 12 µm) et 65 µm) correspondant à une épaisseur sèche comprise entre 2 µm) et 12 µm, plus avantageusement entre 6 µm) et 60 µm) correspondant à une épaisseur sèche comprise entre 1 µm) et 10 µm, plus avantageusement à une épaisseur humide entre 6 µm) et 35 µm) correspondant à une épaisseur sèche comprise entre 1 µm et 6 µm, plus avantageusement entre 12 µm) et 35 µm) correspondant à une épaisseur sèche comprise entre 2 µm) et 6 µm.

Entre l'étape d'application de la couche de base et l'étape d'application de la couche de finition, un temps de pause est avantageusement effectué. Ce temps de pause ne doit pas excéder 50 secondes afin d'éviter l'apparition de cloquage à la surface du système lors de sa mise en cuisson, rendant l'aspect du revêtement non conforme. Le temps de pause maximal pourra être adapté selon l'épaisseur de la couche de base. Par exemple, pour une couche de base ayant une épaisseur humide de 60 µm) correspondant à une épaisseur sèche d'environ 10 µm, le temps de pause maximal sera de 40 secondes, au-delà de ce temps, l'apparition de bullage rendra l'aspect du film non conforme et diminuera les performances du système appliqué. Avantageusement, le temps de pause entre l'application de la couche de base sur le substrat métallique et l'application de la composition de finition sur la couche de base est compris entre 5 secondes et 40 secondes, plus avantageusement entre 10 secondes et 20 secondes. Ce temps de pause joue un rôle sur la tenue à la corrosion après exposition chimique de la pièce métallique revêtue et sur l'aspect final du revêtement. Ce temps de pause permet ainsi de renforcer la protection du revêtement contre les agressions chimiques, notamment contre les acides forts et les bases faibles, et thermique.

Avantageusement, le procédé selon l'invention comprend une première étape de préchauffage du substrat métallique avant application de la couche de base. Le substrat métallique est alors avantageusement préchauffé à une température supérieure à 36 °C, avantageusement supérieure à 40 °C, avantageusement à une température comprise entre 36 °C et 65 °C, plus avantageusement comprise entre 40 °C et 65 °C, en particulier comprise entre 40 °C et 55 °C. Le préchauffage préalable du substrat métallique est contributeur également de la protection du revêtement contre les agressions chimiques, notamment contre les acides fort et les bases faibles, et thermique.

Après l'application de la couche de finition, les compositions de revêtement sont ensuite soumises à une opération de cuisson conduite de préférence à une température comprise entre 280° C et 400°C, de préférence à une température comprise entre 310°C et 350°C.

L'opération de cuisson peut être conduite, pendant environ 20 minutes à 40 minutes une fois la température de métal sélectionnée atteinte, par apport d'énergie thermique, telle que par convection, ou pendant un cycle de cuisson compris entre 30 secondes et 5 min par induction.

Selon un mode de réalisation avantageux, préalablement à l'opération de cuisson, les pièces métalliques revêtues sont soumises à une opération de séchage, de préférence à une température comprise entre 50°C et 130°C. L'opération de séchage des pièces métalliques revêtues peut être conduite par apport d'énergie thermique, telle que par convection, infra-rouge et/ou induction, à une température et une rampe de température définie, avantageusement entre 70°C et 110°C, en convection ou en infra-rouge et/ou induction sur ligne. Une telle opération de séchage permet d'éviter l'apparition de défaut sur la surface du revêtement, tel qu'un cloquage.

Avant l'application de la composition de revêtement, il est judicieux dans la plupart des cas d'éliminer la matière étrangère de la surface du substrat, notamment par nettoyage, dégraissage et rinçage soigneux. Le dégraissage peut être obtenu avec des agents connus, par exemple avec des agents contenant du métasilicate de sodium, de la soude caustique, du tétrachlorure de carbone, du trichloréthylène et analogue. Des compositions de nettoyage alcalines du commerce qui combinent des traitements de lavage et d'abrasion modérés peuvent être utilisées pour le nettoyage, par exemple une solution de nettoyage hydroxyde de sodium-phosphate trisodique aqueuse. En plus du nettoyage, le substrat peut subir un nettoyage plus une gravure.

La présente invention porte également sur un revêtement anticorrosion de pièces métalliques susceptible d'être obtenu par le procédé de type humide-sur-humide (wet-on-wet) décrit ci-dessus.

### Substrat métallique revêtu

La présente invention a également pour objet un substrat métallique revêtu par un revêtement anticorrosion tel que défini ci-dessus ou susceptible d'être obtenu par le procédé décrit ci-dessus.

Le substrat est métallique (également appelée pièce métallique), de préférence en acier ou en fonte, ou en acier ou fonte revêtus de zinc ou d'une couche à base de zinc déposés par différents modes d'application incluant le dépôt mécanique, à la fonte et l'aluminium. Avantageusement, le substrat métallique est en fonte ou fonte revêtu de zinc.

Le substrat métallique selon l'invention est donc revêtu par au moins une couche de base telle que définie ci-dessus et une couche de finition selon l'invention telle que définie ci-dessus ; ces deux couches formant le revêtement anticorrosion selon l'invention et ayant subies une unique étape de cuisson entrainant leur durcissement/réticulation.

Avantageusement, le substrat métallique est revêtu par le revêtement anticorrosion de pièces métalliques de manière uniforme et avec une épaisseur sèche totale comprise entre 2 µm et 35 µm, avantageusement entre 6 µm) à 35 µm, plus avantageusement entre 8 µm) et 30 µm, plus avantageusement entre 11 µm) à 30 µm, encore plus avantageusement entre 11 µm) à 21 µm, encore plus avantageusement entre 10 µm) à 20 µm.

Le substrat métallique peut être dégraissé préalablement à l'application des revêtements, par des méthodes connues de l'homme du métier, notamment par dégraissage alcalin.

### DESCRIPTION DES FIGURES

La Figure 1 représente les différents procédés d'application d'une composition de revêtement en une ou deux couche(s) :
   - La Figure 1A représente un procédé avantageux d'application « humide-sur-humide » (« wet-on-wet ») comprenant une étape a1) de préchauffage du substrat à 40-55°C, une étape a2) d'application de la couche de base, une étape a3) de temps de pause de 10 à 20 secondes, une étape a4) de pulvérisation de la composition de finition, une étape a5) de séchage et une étape a6) de cuisson à environ 340 °C.
   - La Figure 1B représente le procédé d'application « humide-sur-sec » (« wet-on-dry ») par convection comprenant une étape b1) d'application de la couche de base, une étape b2) de séchage par infrarouge à environ 30 °C (ou d'un séchage par apport thermique par convection à 70°C) pendant 15min température de métal suivi d'un refroidissement à une température inférieure à 30°C, une étape b3) de pulvérisation de la composition de finition, une étape b4) de séchage à environ 70 °C par convection et une étape b5) de cuisson à environ 340 °C.
   - La Figure 1C représente le procédé d'application « deux couches deux cuissons » comprenant une étape c1) d'application de la couche de base, une étape c2) de séchage à 70°C suivi d'une cuisson à environ 340 °C par induction, une étape c3) de refroidissement à environ 20 °C, une étape c4) de pulvérisation de la composition de finition et une étape c5) de séchage à 70°C suivi d'une cuisson à environ 340 °C par induction.
   - La Figure 1D représente le procédé d'application « une couche » comprenant une étape d1) d'application de la couche de base et une étape d2) de séchage à 70°C puis de cuisson à 340 °C.

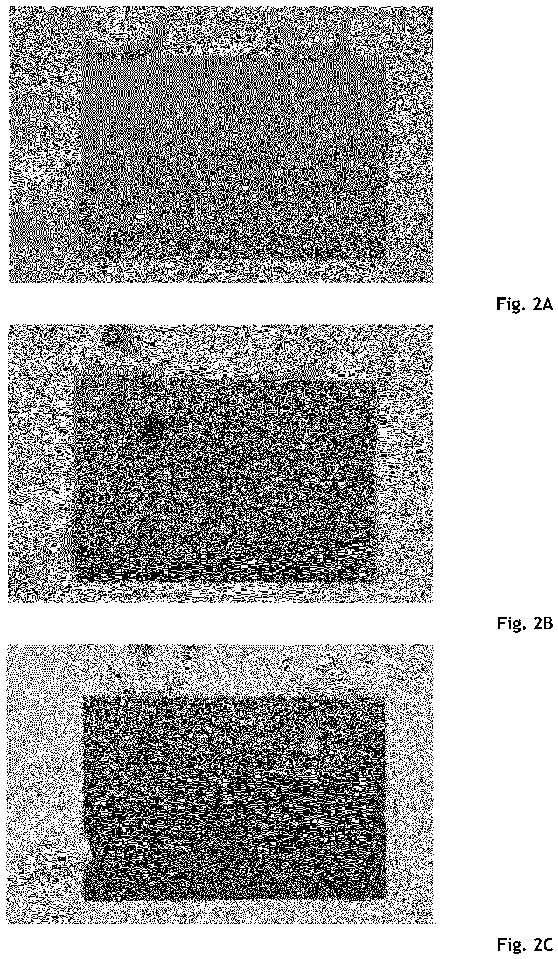

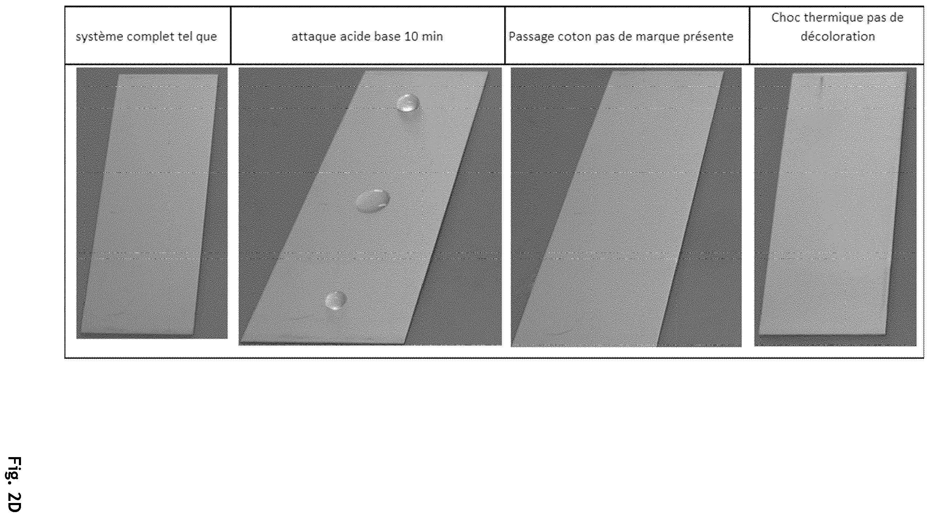

La Figure 2 représente les parties métalliques revêtues par un revêtement dont la composition de finition est la composition B1 (comprenant un liant organique) (Figures 2A à 2C) ou dont la composition de finition est la composition A1 (Figure 2D)
La Figure 3 représente les profils rhéologiques des couches de finition A2 et B2.
La Figure 4 représente une pièce métallique revêtue par un revêtement dont la composition de finition est A2 (Figure 4A) ou B2 (Figure 4B), après exposition au brouillard salin pendant 120h (Figure 4A) ou 72h (Figure 4B).

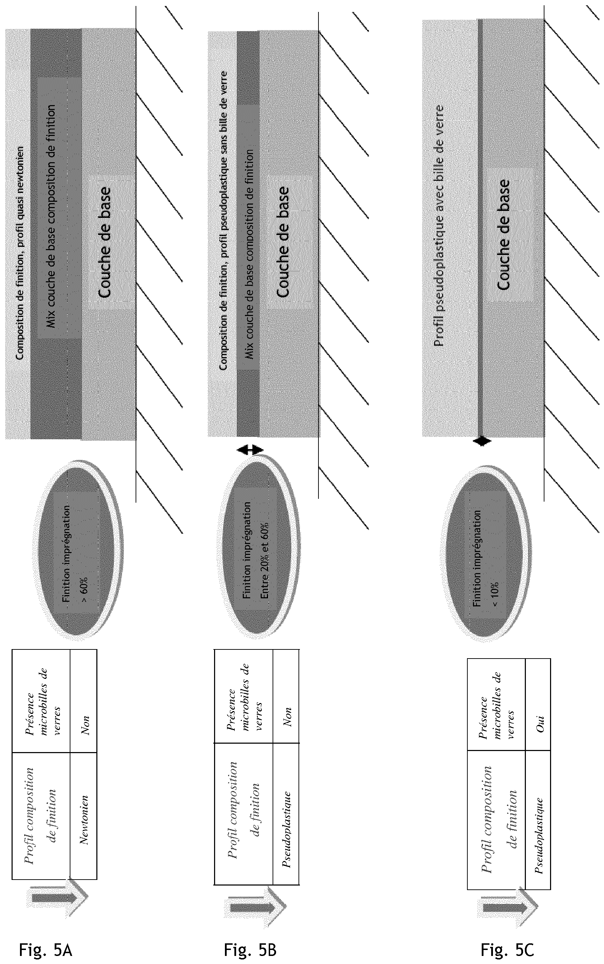

La Figure 5 schématise l'imprégnation et la mesure du taux d'imprégnation de la couche de finition dans la couche de base pour une composition de finition de profil rhéologique newtonien en l'absence de microbilles de verres (Figure 5A), une composition de finition de profil rhéologique pseudoplastique ayant un rapport [Viscosité mesurée à 6 tours par minutes (TPM) / Viscosité mesurée à 60 tours par minutes (TPM)], appelé « Indice de Thixotropie (ITh) », supérieur ou égal à 3 et en l'absence de microbilles de verres (Figure 5B), et une composition de finition de profil rhéologique pseudoplastique ayant un rapport « Indice de Thixotropie (ITh) », supérieur ou égal à 3 et en présence de microbilles de verre (Figure 5C).
La Figure 6 représente un substrat métallique de type fonte revêtu d'un revêtement comprenant une couche de base seule (Figure 6A) après différents chocs thermiques et ayant été exposé au brouillard salin et la Figure 6B représentant le système complet couche de base et composition de finition testé dans les mêmes conditions.

### EXEMPLES

Les exemples qui suivent illustrent la présente invention sans la limiter.

### Ingrédients utilisés

Aluminium stapa PG chromai VIII ^{®} à 80 % = poudre d'aluminium commercialisée par Eckart Werke (extrait sec d'Al : 80 % en poids)
Kelzan AR^{®} = gomme xanthane
Silbercote AQ2169gF3X^{®} (Fournisseur SILBERLINE) =Pâte d'aluminium inhibée
Spheriglass 7010 CP01^{®} = Bille de verre sodocalcique
Silres MP50E^{®} = Dispersion de phényle silicone
Excilvia^{®} (fournisseur BORREGAARD SA) = Nano ou micro fibrille de cellulose (NMFC)
Fintalc MO5^{®} = Talc
PKHW35 ^{®} = Phenoxy resine
Cymel 3717 ^{®} = Mélamine résine

### Protocoles expérimentaux

Dans les exemples qui suivent, les protocoles d'application et de mesure suivants ont été mis en oeuvre :

### Préparation des pièces d'essai

Sauf indication contraire, les pièces d'essai sont des plaques de métal laminées à froid (LAF) 30cmx12 cm ou des disques de frein en fonte. Ces pièces reçoivent généralement une opération de dégraissage alcalin avant l'application du revêtement.

A titre d'exemples de procédé de dégraissage alcalin utilisé nous pouvons citer :
➢ Pour les plaques de LAF :
   - Dégraissage par immersion dans un bain de dégraissant alcalin de type Bonderite C AK C-32
      ∘ Concentration 50 à 60 gr/litre
      ∘ Température d'utilisation 80-95 °C
      ∘ Temps immersion 5-12 minutes
   - Rinçage « mort » à une température de 50°C
   - Surface frottée avec un tampon fibreux de fibres synthétiques imprégnées d'un abrasif
   - Rinçage eau de ville en cascade
   - Séchage à l'air comprimé
➢ Pour les disques de frein en fonte :
   - Dégraissage par immersion dans un bain de dégraissant alcalin de type Bonderite C AK C-32
      ∘ Concentration 50 à 60 gr/litre
      ∘ Température d'utilisation 80-95°C
      ∘ Temps immersion 20-40 minutes
   - Rinçage « mort » 50°C
   - Surface frottée avec un tampon type éponge
   - Rinçage eau de ville en cascade
   - Séchage à l'air comprimé

### Application de la composition de base aux parties d'essai

Les parties propres sont revêtues, de façon typique, en y pulvérisant la composition de base de revêtement, éventuellement avec une action de rotation modérée. La composition de base est telle que décrite dans le Tableau 1 suivant :

**Tableau 1. Composition de base**

| **Ingrédient** | **% masse** | **Description** |
|---|---|---|
| Alu Stapa PG Chromal VIII à 80% | 10.44% | Aluminium lamellaire dans le Dipropylène glycol |
| γ-Glycidoxypropyltrimethoxysilane | 8.67% | Liant |
| Dipropylène Glycol | 8.42% | Solvant lourd |
| Eau desionisée | 42.40% | Eluant |
| Pâte de zinc 31129/G/92 | 25.22% | Zinc lamellaire dans le white spirit |
| Additifs | 4.86% | Additifs antimousse, agent d'étalement, passivant, rhéologique, dispersant |

### Application de la composition de finition aux parties d'essai revêtues de la couche de base

Les parties d'essai préalablement revêtues de la couche de base sont ensuite revêtues de la couche de finition par pulvérisation, éventuellement avec une action de rotation modérée. La composition de finition est telle que décrite dans le Tableau 2 suivant :

**Tableau 2. Composition de finition**

| **Ingrédient** | **% masse** | **Description** |
|---|---|---|
| Eau desionisée | 54.25% | Eluant |
| Kelzan AR^{®} | 0.23% | Epaississant de type gomme de Xanthane |
| Sphériglass 7010 CP01 ^{®} | 4.16% | Billes de verre sodocalciques |
| Silbercoat AQ2169gF3X^{®} | 9.24% | Aluminium lamellaire passivé |
| Exclivia ^{®} 100% matière sèche | 0.12% | Epaississant cellulosique NMFC |
| Silres MP50E ^{®} 50% matière sèche | 31.80% | Dispersion de Phénylméthylsilicone |
| Additifs | 0.20% | Additifs antimousse et tensio actifs |

Les parties d'essai ainsi revêtues sont ensuite soumis à cuisson immédiate ou avec séchage préalable. La cuisson se déroule dans un four de convection à air chaud, aux températures et aux durées indiquées dans les exemples et les Figures 1A à 1D. Le séchage entre les deux couches peut se dérouler sous exposition infrarouge pendant 30 secondes.

### Essai de résistance à la corrosion (ASTM B117) et estimation

La résistance à la corrosion de parties revêtues est mesurée au moyen de l'essai de projection de sel standard (brouillard) pour des peintures et vernis ASTM B- 117. Dans cet essai, les parties sont placées dans une chambre maintenue à une température constante où elles sont exposées à une fine projection (brouillard) d'une solution saline à 5 pour-cent pendant des périodes spécifiques de temps, rincées à l'eau et séchées. L'étendue de la corrosion des parties éprouvées peut être exprimée sous la forme du pourcentage de rouille rouge. Pour une partie de panneau d'essai contenant une partie déformée de mandrin conique (coude), la corrosion de coude peut également être exprimée en pour-cent de rouille rouge. Initialement, après le revêtement et la flexion, un ruban sensible à la pression est appliqué au coude. Le ruban est ensuite retiré rapidement du coude. Ceci est réalisé pour déterminer l'adhésion du revêtement. Le panneau est ensuite soumis à l'essai de résistance à la corrosion.

### Essai de résistance aux agressions chimiques

La résistance aux agressions chimiques des parties revêtues est mesurée au moyen de l'exposition à différents nettoyants de jante pendant 10 ou 30 minutes, un rinçage et une exposition au brouillard salin (SST) telle que décrite ci-dessus.

Les nettoyants de jantes testés sont :
- Sineo^{™} (pH 13) - SADAPS BARDAHL additives and lubricants
- Aluminium Teufel (pH < 1) - TUGA Chemie Gmbh
- Neutral Cleaner (pH 8).

### Exemple 1. Comparaison des différents procédés de traitement

Les différents procédés décrits par les Figures 1A à 1D sont mis en oeuvre sur substrat de type fonte. L'apparition de rouille, la consommation énergétique et le temps de traitement des pièces sont ensuite comparés (Tableau 3). Les couches de base et de finition utilisées sont identiques.

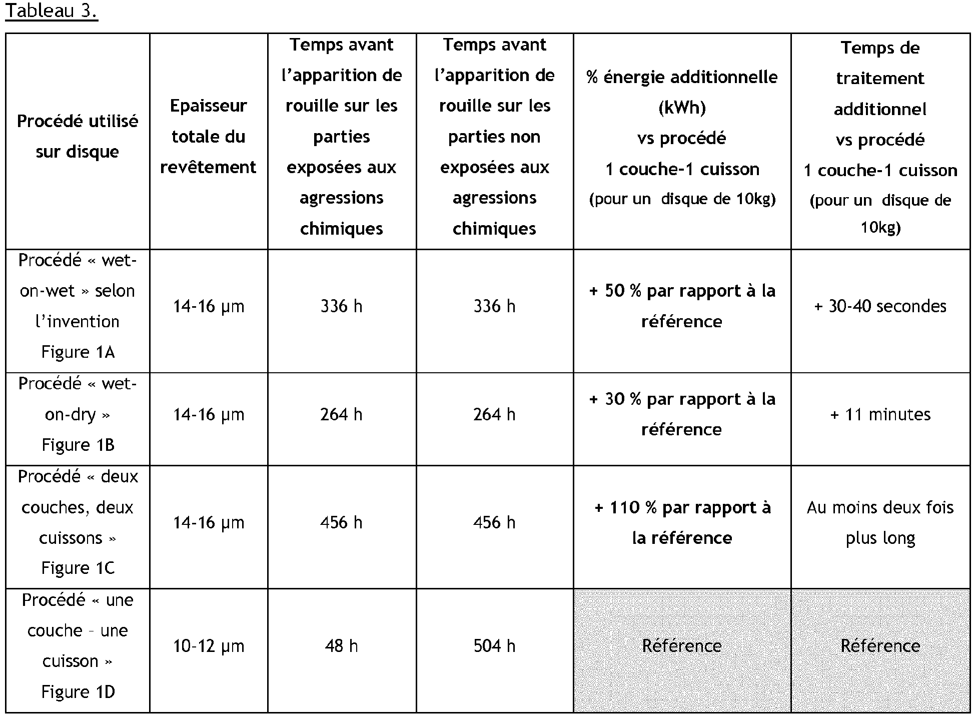

Le revêtement obtenu par le procédé « une couche » (Figure 1D) ne confère au substrat que des propriétés de protection cathodique. Il ne résiste pas aux acides forts et/ou aux bases fortes.

### Exemple 2. Comparaison d'un liant de type alkylphénylsiloxane et d'un liant de type organique dans la composition de finition.

Pour cet exemple, chacune des compositions de finition a été appliquée par pulvérisation sur un substrat de type métallique laminé à froid revêtu de la couche de base de l'exemple 1. Après la cuisson finale, le substrat métallique traité est soumis à une ou deux attaques chimiques : Acide chlorydrique 38% et NaOH 5 %.

L'apparence du substrat (dégradation visuelle) est ensuite analysée.

### a) Composition A1 selon l'invention (comprenant un liant méthylphénylsiloxane) (Tableau 4.)

**Tableau 4.**

| **Ingrédient** | **% masse** | **Description** |
|---|---|---|
| Eau désionisée | 54.25% | Eluant |
| Kelzan AR^{®} | 0.23% | Epaississant de type gomme de Xanthane |
| Sphériglass 7010 CP01 ^{®} | 4.16% | Billes de verre sodocalciques |
| Silbercoat AQ2169gF3X^{®} | 9.24% | Aluminium lamellaire passivé |
| Exclivia ^{®} 100% matière sèche | 0.12% | Epaississant cellulosique NMFC |
| Silres MP50E ^{®} 50% matière sèche | 31.80% | Dispersion de Phénylméthylsilicone |
| Additifs | 0.20% | Additifs antimousse et tensio actifs |

### b) Composition B1 comprenant un liant de type organique thermodurcissable (Tableau 5.)

**Tableau 5.**

| **Ingrédient** | **% masse** | **Description** |
|---|---|---|
| Eau desionisée | 33.31% | Eluant |
| Talc (Fintalc MO5^{®}) | 6.41% | Charge minérale |
| Phenoxy resine (PKHW35^{®}) | 52.71% | Liant 35% de matière sèche |
| Melamine résine (Cymel 3717^{®} ) | 6.09% | Agent de réticulation de type mélamine |
| Additifs | 1.48% | Agent de tension de surface |

### c) Résultats après attaque chimique (Tableau 6.)

**Tableau 6.**

| | **Procédé utilisé** | | **Composition de finition utilisée** | **Résultats après attaque chimique** |
|---|---|---|---|---|
| Cas 1 | Deux couches et deux cuissons, (310°C pour la couche de base, 180°C pour la finition) | | Composition B1 | Figure 2A |
| Cas 2 | Deux couches et une seule cuisson 310°C avec période de séchage intermédiaire | | Composition B1 | Figure 2B |
| Cas 3 | Deux couches et une cuisson 310°C avec période de séchage intermédiaire, suivi d'un choc thermique | | Composition B1 | Figure 2C |
| Cas 4 | Deux couches et une seule cuisson 310°C avec période de séchage intermédiaire | | Composition A1 | Figure 2D |

Cette étude démontre qu'un système de type organique après cuisson à 310 °C (cas 2 et 3) suivi d'un choc thermique ne maintient pas son aspect initial et surtout ne permet plus de jouer son rôle de protection contre les agents chimiques.

La dégradation d'aspect dans les cas 2 et 3 (deux couches une seule cuisson) s'accompagne d'une perte de résistance chimique et d'une perte du caractère hydrophobe du système. Dans le cas 3, la consommation totale du zinc du système après attaque chimique ne permet plus d'assurer la protection cathodique du système complet. Dans le cas 4 avec l'utilisation de la composition A1, nous n'observons aucune dégradation du revêtement après attaque chimique et ce en tel que et après choc thermique 300°C 1H. La composition A1 permet donc bien de protéger le Zinc présent dans la couche de base et ainsi conserver la protection cathodique du système complet

### Exemple 3. Influence de la rhéologie contrôlée de la composition de finition

### a) Composition de finition A2 comprenant le couple gomme de xanthane/NMFC en tant qu'épaississant (Tableau 7.)

**Tableau 7.**

| **Ingrédient** | **% masse** | **Description** |
|---|---|---|
| Eau désionisée | 54.25% | Eluant |
| Kelzan AR^{®} | 0.23% | Epaississant de type gomme de Xanthane |
| Sphériglass 7010 CP01 ^{®} | 4.16% | Billes de verre sodocalciques |
| Silbercoat AQ2169gF3X^{®} | 9.24% | Aluminium lamellaire passivé |
| Exclivia ^{®} 100% de matière sèche | 0.12% | Epaississant cellulosique NMFC |
| Silres MP50E ^{®} 50% de matière sèche | 31.80% | Dispersion de Phénylméthylsilicone |
| Additifs | 0.20% | Additifs antimousse et tensio actifs |

### b) Composition de finition B2 comprenant un épaississant conventionnel (Natrosol 330+) (Tableau 8.)

**Tableau 8.**

| **Ingrédient** | **% masse** | **Description** |
|---|---|---|
| Eau désionisée | 54.15% | Eluant |
| Natrosol 330+^{®} | 0.45% | Epaississant de type cellulosique |
| MICA TF^{®} | 4.16% | Charge minérale |
| Silbercoat AQ2169gF3X^{®} | 9.24% | Aluminium lamellaire passivé |
| Silres MP50E ^{®} 50% de matière sèche | 31.80% | Dispersion de Phénylméthylsilicone |
| Additifs | 0.20% | Additifs antimousse et tensio actifs |

### c) Analyse de l'influence de la rhéologie sur l'imprégnation

La rhéologie des compositions a été mesurée selon la méthode suivante :
NF EN ISO 2555 (septembre 1999) qui consiste à mesurer la résistance d'un mobile en rotation dans un échantillon. Le couple mesuré, la vitesse de rotation et les caractéristiques du mobile sont combinés pour calculer la valeur de viscosité, ces mesures sont reportées sous la forme de graphiques tel que la Fig. 3, la mesure est effectuée à 20°C +ou -2. Pour la composition ces valeurs sont déterminées à l'aide du mobile LV2 Brookfield et les viscosités sont mesurées sur une plage de vitesse définie entre 3 et 60 RPM.

Les profils obtenus sont présentés dans la Figure 3. La composition A2 a un profil pseudo-plastique et un indice de thixotropie supérieur ou égal à 3 tandis que la composition B2 a un profil newtonien et un indice de thixotropie inférieur à 3.

Chacune des compositions de finition a ensuite été appliquée par pulvérisation sur un substrat de type fonte et revêtu de la couche de base de l'exemple 1. L'imprégnation peut ensuite être contrôlée selon l'une des deux méthodes suivantes :
- par fluorescence X : l'élément silice présent dans la composition de finition se retrouve masqué lors de son imprégnation dans un milieu riche en zinc, il est alors détectable seulement en surface du système, ce qui permet d'évaluer son positionnement dans le système complet. Utilisation de l'appareil portatif X-Ray NITON GOLD++ ;
- par exposition au brouillard salin (SST): la deuxième possibilité consiste à exposer au brouillard salin le système complet pour en évaluer la performance en protection cathodique. En s'imprégnant la composition de finition va jouer le rôle d'isolant auprès du zinc et dégrader fortement les performances anti-corrosion du système (diminution de la protection cathodique du système).

Dans le cadre de cette étude, l'évaluation a été réalisée par exposition au brouillard pendant 120 h.

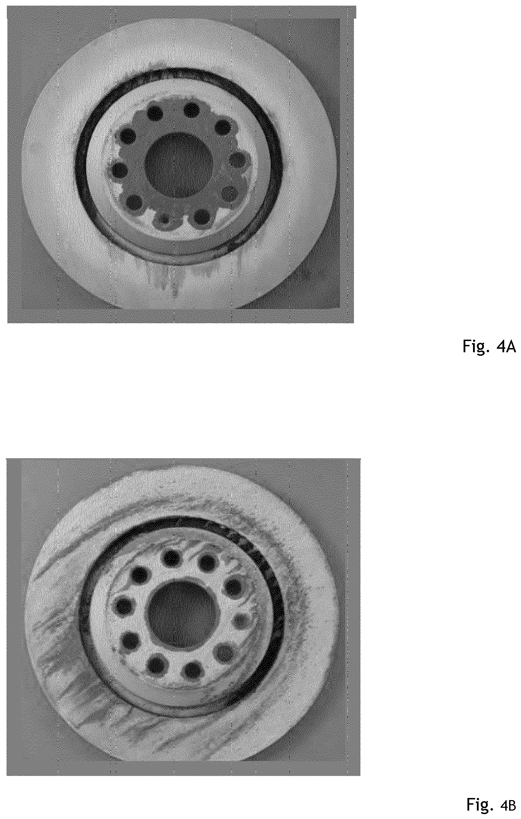

La Figure 4A montre la zone d'imprégnation de la composition A2 après une exposition de 120h au brouillard salin. On observe une très faible dégradation visuelle de la zone. L'imprégnation a donc été limitée avec la composition A2.

En revanche, la Figure 4B montre la zone d'imprégnation de la composition B2 après une exposition de 72h au brouillard salin. On observe une forte dégradation visuelle de la zone. L'imprégnation n'a donc pas été limitée avec la composition B2.

En conclusion, pour limiter cette interpénétration (dans les conditions de traitement de cette invention) il convient d'utiliser une composition de finition présentant un indice de thixotropie supérieur ou égal à 3 et un profil pseudo plastique.

### Exemple 4. Influence de la présence de microbilles de verre

A la suite pour déterminer l'importance de la partie microbille de verre lors du procédé de transformation, nous avons analysé la zone d'imprégnation entre les deux couches par fluorescence X. Les compositions de finition suivantes ont été analysées :
- Profil quasi newtonien, indice de thixotropie inférieur à 2 (ratio calculé entre la viscosité à vitesse 60 et vitesse 6) et absence de microbilles de verre ;
- Profil pseudoplastique, indice de thixotropie supérieur à 4 (ratio calculé entre la viscosité à vitesse 60 et vitesse 6) et absence de microbilles de verre ;
- Profil pseudo plastique, indice de thixotropie supérieur à 4 et présence de microbilles de verre.

Ces compositions de finition ont été appliquées selon le procédé humide-sur-humide (wet-on-wet) de la présente invention, c'est-à-dire le procédé comprenant les étapes décrites à la Figure 1A. La couche de base a une épaisseur de 10 µm et la composition de finition a une épaisseur de 4 µm.

Les Figures 5A, 5B et 5C liées respectivement à chacune de ces compositions de finition résument les résultats obtenus et permettent de mettre en évidence que :
- pour une composition ayant un profil newtonien, un indice de thixotropie inférieur à 2, et n'ayant pas de microbilles de verre, le taux d'imprégnation est supérieur à 60 % et peut dépasser les 70 à 80 % ; et
- pour le même profil rhéologique recherché, c'est-à-dire pseudo-plastique et indice de thixotropie supérieur à 4 :
   ∘ Sans bille de verre : le taux d'imprégnation de la composition de finition mesuré par perte en élément silicium est évalué entre 20 et 60% ; et
   ∘ Lorsque l'on ajoute à la composition de finition les microbilles de verre (10% CPV), l'imprégnation, suivant le procédé ci-dessus, est inférieure à 10 %,

Les microbilles de verres permettent de renforcer la résistance chimique du système notamment à faible épaisseur de finition.

### Exemple 5. Influence de la présence de la composition de finition sur le système

Dans les exemples qui suivent les produits ont été appliqués sur fonte selon le procédé humide-sur-humide (wet-on-wet) (Figure 1A). La couche de base est appliquée à une épaisseur de 10-12 µm et la couche de finition à une épaisseur de 6-8 µm. Les substrats revêtus sont ensuite soumis à un choc thermique de 450°C pendant 24h puis exposé au brouillard salin pendant 120 h.

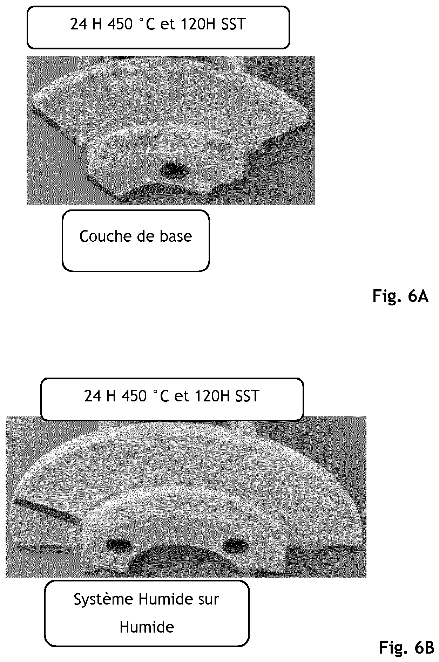

La Figure 6A représente l'apparence du substrat revêtu comprenant une couche de base, telle que décrite dans le tableau 1, seule. De fortes dégradations sont observées après 48h.

La Figure 6B représente l'apparence du substrat revêtu d'une couche de base telle que décrite dans le tableau 1, et d'une couche de finition telle que décrite dans le tableau 2, en procédé wet-on-wet soumis à un choc thermique de 450°C pendant 24h puis exposé au brouillard salin (SST) pendant 120 h). Aucune dégradation n'est observée.

### Exemple 6. Influence de la température du substrat avant application

Le procédé humide-sur-humide (wet-on-wet) décrit à la Figure 1A est mis en oeuvre en variant la température de préchauffage du substrat et l'épaisseur de la composition de finition. Le système obtenu est ensuite soumis à un protocole de tests pour établir leur performance. Ce protocole de tests est basé sur une exposition à différents nettoyants de jante pendant 10 ou 30 minutes, un rinçage et une exposition pendant 120 h au brouillard salin.

Les nettoyants de jantes testés sont :
- Sineo^{™} (pH 13) - SADAPS BARDAHL additives and lubricants
- Aluminium Teufel (pH < 1) - TUGA Chemie Gmbh
- Neutral Cleaner (pH 8).

Le tableau 9 ci-dessous résume les différents résultats de tenue au brouillard salin après exposition aux nettoyants de jante.

**Tableau 9.**

| **Température du substrat** | **Epaisseur de la couche de finition** | | | | |
|---|---|---|---|---|---|
| | 1 µm | 2 µm | 4 µm | 6 µm | 8 µm |
| 30°C | Mauvaise résistance | Mauvaise résistance | Mauvaise résistance | Mauvaise résistance | Hors limite de mesure |
| 40°C | Bonne résistance | Bonne résistance | Bonne résistance | Bonne résistance | Bonne résistance |
| 55°C | Bonne résistance | Bonne résistance | Bonne résistance | Bonne résistance | Bonne résistance |

La performance optimale de tenue à la corrosion après attaque chimique et 120 heures d'exposition au brouillard salin est obtenue pour un préchauffage de substrat au moins égal à 40°C,

### Exemple 7. Influence du délai entre l'application de la couche de base et l'application de la couche de finition (Configuration 10 µm de couche de base et 4 µm de finition sur fonte usinée)

Le procédé humide-sur-humide (wet-on-wet) décrit à la Figure 1A est mis en oeuvre en variant le délai entre l'application de la couche de base et l'application de la couche de finition de 10 à 40 secondes, par tranche de 5 secondes. Le système obtenu est ensuite soumis à un protocole de tests pour établir leur performance. Ce protocole de tests est basé sur une exposition à différents nettoyants de jante pendant 10 minutes ou 30 minutes, un rinçage et une exposition pendant 120 h au brouillard salin.

Les nettoyants de jantes testés sont :
- Sineo^{™} (pH 13) - SADAPS BARDAHL additives and lubricants
- Aluminium Teufel (pH < 1) - TUGA Chemie Gmbh
- Neutral Cleaner (pH 8).

Le tableau 10 ci-dessous résume les différents résultats obtenus.

**Tableau 10.**

| **Délai** | **Temps d'exposition au brouillard salin** | | |
|---|---|---|---|
| | 120 h | 264 h | 456 h |
| 10 secondes | Bonne résistance chimique | Bonne résistance chimique | Bonne résistance chimique |
| 15 secondes | Bonne résistance chimique | Bonne résistance chimique | Bonne résistance chimique |
| 20 secondes | Bonne résistance chimique | Bonne résistance chimique | Bonne résistance chimique |
| 25 secondes | Bonne résistance chimique | Faible résistance chimique | - |
| 30 secondes | Bonne résistance chimique | Faible résistance chimique | - |
| 35 secondes | Bonne résistance chimique | Faible résistance chimique | - |
| 40 secondes | Bonne résistance chimique | Faible résistance chimique | - |
| 50 secondes | Bullage observé en surface | - | - |

### Conclusion

Le délai entre l'application de la couche de base et de la couche de finition a son importance pour deux raisons :
✔ Il joue un rôle sur la tenue corrosion après exposition chimique suivant notre protocole de test ; et
✔ Il joue également un rôle sur l'aspect final du film.

## Revendications

1. Composition de finition pour revêtement de pièce métallique préalablement revêtue d'un revêtement anticorrosion, comprenant au moins un liant de type alkylphénylsiloxane, des microbilles de verre, et éventuellement des particules de charge à haute tenue thermique et/ou de l'aluminium particulaire, ladite composition présentant un indice de Thixotropie (ITh) supérieur ou égal à 3, l'indice de Thixotropie correspondant au rapport Viscosité mesurée à 6 tours par minutes (TPM)/Viscosité mesurée à 60 tours par minutes (TPM)], lesdites viscosités étant mesurées selon la méthode NF EN ISO 2555 de septembre 1999.

2. Composition selon la revendication 1, **caractérisée en ce que** son profil rhéologique est un profil pseudo plastique.

3. Composition selon la revendication 1 ou 2, **caractérisée en ce que** la teneur en liant de type alkylphénylsiloxane, exprimée par sa teneur en matière sèche, est inférieure ou égale à 30 % en masse, de préférence comprise entre 10 % et 30 % en masse, plus particulièrement entre 15 % et 18 % en masse, par rapport à la masse totale de la composition de finition.

4. Composition selon l'une quelconque des revendications 1 à 3, **caractérisée en ce que** la teneur en microbilles de verre est comprise entre 2 % et 5 % en masse, plus particulièrement entre 3.5 % et 4.5% en masse, par rapport à la masse totale de la composition de finition.

5. Composition selon l'une quelconque des revendications 1 à 4, **caractérisée en ce qu'**elle comprend en outre un agent épaississant et/ou un agent dispersant et/ou un agent mouillant.

6. Composition selon l'une quelconque des revendications 1 à 5, **caractérisée en ce qu'**elle comprend des particules d'aluminium, en particulier des particules d'aluminium de type lamellaire.

7. Composition selon la revendication 6, **caractérisée en ce que** la teneur en particules d'aluminium, notamment en particules d'aluminium de type lamellaire est supérieure ou égale à 10% en masse, en particulier comprise entre 3 % et 10 % en masse, avantageusement entre 3 % et 5 % en masse, par rapport à la masse totale de la composition de finition.

8. Revêtement anticorrosion de pièce métallique comprenant au moins deux couches différentes l'une de l'autre, la première couche étant une couche de base comprenant au moins de l'eau, un métal particulaire et un liant, et la seconde couche étant une composition de finition telle que définie dans l'une quelconque des revendications 1 à 7.

9. Procédé d'application d'un revêtement anticorrosion tel que défini dans la revendication 8 sur un substrat métallique, comprenant une étape d'application de ladite composition de finition sur ladite couche de base préalablement appliquée sur le substrat métallique, **caractérisé en ce que** ladite couche de base est encore humide lors de l'application de la composition de finition, et optionnellement ledit procédé comprend un temps de pause compris entre 5 secondes et 40 secondes, avantageusement entre 10 secondes et 20 secondes, entre l'application de la couche de base sur le substrat métallique et l'application de la composition de finition sur la couche de base.

10. Procédé selon la revendication 9, **caractérisé en ce que** l'étape d'application de la composition de finition est effectuée par pulvérisation.

11. Procédé selon la revendication 9 ou 10, **caractérisé en ce qu'**il comprend une première étape de préchauffage du substrat métallique à une température supérieure à 36° C, de préférence comprise entre 36 ° C et 65 ° C, en particulier entre 40 ° C et 65 ° C, plus particulièrement entre 40 ° C et 55 ° C.

12. Procédé selon l'une quelconque des revendications 9 à 11, **caractérisé en ce qu'**il comprend une étape de cuisson du substrat métallique revêtu avec la couche de base et la composition de finition, de préférence conduite à une température comprise entre 280°C et 400°C, avantageusement entre 310 °C et 350°C.

13. Procédé selon la revendication 12, **caractérisé en ce qu'**il comprend une étape de séchage préalable à l'étape de cuisson, notamment par convection, infrarouge ou induction.

14. Revêtement anticorrosion de pièces métalliques, **caractérisé en ce qu'**il est obtenu par le procédé selon l'une quelconque des revendications 9 à 13.

15. Substrat métallique revêtu par un revêtement anticorrosion tel que défini dans la revendication 8 ou 14, ledit revêtement ayant de préférence une épaisseur uniforme comprise entre 2 pm et 35 pm, avantageusement entre 8 pm et 30 pm, plus avantageusement entre 10 pm et 20 pm .

## Patentansprüche

1. Endfertigungszusammensetzung zur Beschichtung eines metallischen Teils, das zuvor mit einer Korrosionsschutzbeschichtung beschichtet wurde, die mindestens ein Bindemittel vom Typ Alkylphenylsiloxan, Glasmikrokugeln und eventuell Füllstoffteilchen mit hoher Wärmebeständigkeit und/oder teilchenförmiges Aluminium umfasst, wobei die Zusammensetzung einen Thixotropieindex (Ith) von größer oder gleich 3 aufweist, wobei der Thixotropieindex dem Verhältnis Viskosität, gemessen bei 6 Umdrehungen pro Minute (UPM)/Viskosität gemessen bei 60 Umdrehungen pro Minute (UPM) entspricht, wobei die Viskositäten gemäß dem Verfahren NF EN ISO 2555 vom September 1999 gemessen werden.

2. Zusammensetzung nach Anspruch 1, **dadurch gekennzeichnet, dass** ihr rheologisches Profil ein pseudoplastisches Profil ist.

3. Zusammensetzung nach Anspruch 1 oder 2, **dadurch gekennzeichnet, dass** der Gehalt an Bindemittel vom Typ Alkylphenylsiloxan, ausgedrückt als dessen Trockenmassegehalt, kleiner oder gleich 30 Masse-%, bevorzugt zwischen 10 Masse-% und 30 Masse-%, ganz besonders zwischen 15 Masse-% und 18 Masse-%, bezogen auf die Gesamtmasse der Endfertigungszusammensetzung, beträgt.

4. Zusammensetzung nach einem der Ansprüche 1 bis 3, **dadurch gekennzeichnet, dass** der Gehalt an Glasmikrokugeln zwischen 2 Masse-% und 5 Masse-%, ganz besonders zwischen 3,5 Masse-% und 4,5 Masse-%, bezogen auf die Gesamtmasse der Endfertigungszusammensetzung, beträgt.

5. Zusammensetzung nach einem der Ansprüche 1 bis 4, **dadurch gekennzeichnet, dass** sie außerdem ein Verdickungsmittel und/oder ein Dispergierungsmittel und/oder ein Benetzungsmittel umfasst.

6. Zusammensetzung nach einem der Ansprüche 1 bis 5, **dadurch gekennzeichnet, dass** sie Aluminiumteilchen, insbesondere Aluminiumteilchen vom Lamellentyp, umfasst.

7. Zusammensetzung nach Anspruch 6, **dadurch gekennzeichnet, dass** der Gehalt an Aluminiumteilchen, insbesondere an Aluminiumteilchen vom Lamellentyp, größer oder gleich 10 Masse-%, insbesondere zwischen 3 Masse-% und 10 Masse-%, vorteilhafterweise zwischen 3 Masse-% und 5 Masse-%, bezogen auf die Gesamtmasse der Endfertigungszusammensetzung, beträgt.

8. Korrosionsschutzbeschichtung eines metallischen Teils, die mindestens zwei voneinander unterschiedliche Schichten umfasst, wobei die erste Schicht eine Grundschicht ist, die mindestens Wasser, ein teilchenförmiges Metall und ein Bindemittel umfasst, und die zweite Schicht eine Endfertigungszusammensetzung wie in einem der Ansprüche 1 bis 7 definiert, ist.

9. Verfahren zum Auftragen einer Korrosionsschutzbeschichtung, wie in Anspruch 8 definiert, auf einem metallischen Substrat, das einen Schritt des Auftragens der Endfertigungszusammensetzung auf der Grundschicht umfasst, die zuvor auf dem metallischen Substrat aufgetragen wurde, **dadurch gekennzeichnet, dass** die Grundschicht bei dem Auftragen der Endfertigungszusammensetzung noch feucht ist, und wobei das Verfahren wahlweise eine Ruhezeit zwischen 5 Sekunden und 40 Sekunden, vorteilhafterweise zwischen 10 Sekunden und 20 Sekunden, zwischen dem Auftragen der Grundschicht auf dem metallischen Substrat und dem Auftragen der Endfertigungszusammensetzung auf der Grundschicht umfasst.

10. Verfahren nach Anspruch 9, **dadurch gekennzeichnet, dass** der Schritt des Auftragens der Endfertigungszusammensetzung durch Sprühen erfolgt.

11. Verfahren nach Anspruch 9 oder 10, **dadurch gekennzeichnet, dass** es einen ersten Vorheizschritt des metallischen Substrats auf eine Temperatur über 36 °C, bevorzugt zwischen 36 °C und 65 °C, insbesondere zwischen 40 °C und 65 °C, ganz besonders zwischen 40 °C und 55 °C, umfasst.

12. Verfahren nach einem der Ansprüche 9 bis 11, **dadurch gekennzeichnet, dass** es einen Schritt des Brennens des metallischen Substrats, das mit der Grundschicht und der Endfertigungszusammensetzung beschichtet ist, bevorzugt bei einer Temperatur zwischen 280 °C und 400 °C, vorteilhafterweise zwischen 310 °C und 350 °C, umfasst.

13. Verfahren nach Anspruch 12, **dadurch gekennzeichnet, dass** es einen Trocknungsschritt vor dem Schritt des Brennens, insbesondere durch Konvektion, Infrarot oder Induktion, umfasst.

14. Korrosionsschutzbeschichtung für metallische Teile, **dadurch gekennzeichnet, dass** sie durch das Verfahren nach einem der Ansprüche 9 bis 13 erhalten wird.

15. Metallisches Substrat, das mit einer Korrosionsschutzbeschichtung wie in Anspruch 8 oder 14 definiert beschichtet ist, wobei die Beschichtung bevorzugt eine gleichmäßige Dicke zwischen 2 µm und 35 µm, vorteilhafterweise zwischen 8 µm und 30 µm, noch vorteilhafter zwischen 10 µm und 20 µm umfasst.

## Claims

1. A finishing composition for coating a metal part previously coated with a corrosion-resistant coating, comprising at least a binder of alkylphenylsiloxane type, glass microbeads, and optionally filler particles with a high thermal resistance and/or particulate aluminum, said composition having a thixotropic index (ITh) greater than or equal to 3, the thixotropic index corresponding to the ratio Viscosity measured at 6 revolutions per minute (RPM) / Viscosity measured at 60 revolutions per minute (RPM)], said viscosities being measured according to the NF EN ISO 2555 method of September 1999.

2. The composition according to claim 1, **characterized in that** its rheological profile is a pseudo plastic profile.

3. The composition according to claim 1 or 2, **characterized in that** the content of binder of alkylphenylsiloxane type, expressed by its dry matter content, is less than or equal to 30% by mass, preferably comprised between 10% and 30% by mass, more particularly between 15% and 18% by mass, relative to the total mass of the finishing composition.

4. The composition according to any one of claims 1 to 3, **characterized in that** the content of glass microbeads is comprised between 2% and 5% by mass, more particularly between 3.5% and 4.5% by mass, relative to the total mass of the finishing composition.

5. The composition according to any one of claims 1 to 4, **characterized in that** it further comprises a thickening agent and/or a dispersing agent and/or a wetting agent.

6. The composition according to any one of claims 1 to 5, **characterized in that** it comprises aluminum particles, in particular aluminum particles of the lamellar type.

7. The composition according to claim 6, **characterized in that** the content of aluminum particles, in particular of lamellar-type aluminum particles is greater than or equal to 10% by mass, in particular comprised between 3% and 10% by mass, advantageously between 3% and 5% by mass, relative to the total mass of the finishing composition.

8. A corrosion-resistant coating of a metal part comprising at least two coats different from each other, the first coat being a base coat comprising at least water, a particulate metal and a binder, and the second coat being a finishing composition as defined in any one of claims 1 to 7.

9. A method for applying a corrosion-resistant coating as defined in claim 8 on a metal substrate, comprising a step of applying said finishing composition to said base coat previously applied to the metal substrate, **characterized in that** said base coat is still wet during the application of the finishing composition, and optionally said method comprises a pause time comprised between 5 seconds and 40 seconds, advantageously between 10 seconds and 20 seconds, between the application of the base coat on the metal substrate and the application of the finishing composition on the base coat.

10. The method according to claim 9, **characterized in that** the step of applying the finishing composition is carried out by spraying.

11. The method according to claim 9 to 10, **characterized in that** it comprises a first step of preheating the metal substrate to a temperature greater than 36°C, preferably comprised between 36°C and 65°C, in particular between 40°C and 65°C, more particularly between 40°C and 55°C.

12. The method according to any one of claims 9 to 11, **characterized in that** it comprises a step of baking the metal substrate coated with the base coat and the finishing composition, carried out preferably at a temperature comprised between 280°C and 400°C, advantageously between 310°C and 350°C.

13. The method according to claim 12, **characterized in that** it comprises a drying step prior to the baking step, in particular by convection, infrared or induction.

14. A corrosion-resistant coating of metal parts, **characterized in that** it is obtained by the method according to any one of claims 9 to 13.

15. A metal substrate coated with a corrosion-resistant coating as defined in claim 8 or 14, said
coating having a uniform thickness comprised between 2 µm and 35 µm, advantageously between 8 µm and 30 µm, more advantageously between 10 µm and 20 µm.
